# EUROPEAN PATENT APPLICATION

(11) **EP 1 172 773 A1**
(43) Date of publication of application: **16.01.2002**
(21) Application number: 00920753.1
(22) Date of filing: 19.04.2000
(51) Int. Cl.: G07D 7/04, G07D 7/12, G06K 7/08, G06K 7/12, G06K 19/12

(54) **APPARATUS FOR VALIDATING SECURITY DOCUMENTS**

(30) Priority: 20.04.1999 ES 9900809
(71) Applicant: FABRICA NACIONAL DE MONEDA Y TIMBRE, 28009 Madrid (ES)
(72) Inventor: GARCIA CATALAN, Alfonso-Tomás, E-28009 Madrid (ES); MERCHAN PALACIOS, Miguel, E-28009 Madrid (ES); DAVO FERRO, Rafael, E-28009 Madrid (ES); TEODORO VIDAL, Juan-Vicente, E-28009 Madrid (ES)
(74) Representative: Carpintero Lopez, Francisco
(86) International application number: ES0000147
(87) International publication number: WO0063851

(57) **Abstract**

The invention relates to an apparatus for validating all types of security documents such as bank notes, checks or other types of securities. To this end, the apparatus simultaneously uses an infrared ray-sensitive optical sensor, a visible light-sensitive sensor and a magnetic sensor detecting the presence of a magnetic thread and reading the code thereof. The information provided by each sensor is compared with the information supplied by the other sensors in such a way that when the optical sensor detects by opacity the presence of the security thread, the magnetic sensor recognizes the beginning of the code to read said code.

## Description

### OBJECT OF THE INVENTION

The present invention discloses an identifier for all types of security documents, particularly designed for paper money, which is capable of determining the authenticity of the document as well as its denomination and estimating its deterioration.

The object of the identifier is to maximise the reliability of the validation without a significant increase in the cost of the identification device.

### BACKGROUND OF THE INVENTION

Identifiers which accept documents are well known, using various methods for determining their authenticity, analysing a certain property, mark or security element which is provided in the document.

In this manner, several methods are used which employ optical means, magnetic means, physical properties of the paper, etc., among which is known the use of ink transparent to infra-red light, watermarks, colour of printed ink, inclusion of a magnetic safety filament, etc.

Known security document identifiers, depending on the specific application for which they are meant, conventionally rely on one of these validation methods, reading the security element and later processing the data obtained by comparison to a model register, in order to determine their authenticity. However, no device is known which relies on simultaneous combination of several of these validation methods in the manner performed by the present one.

### DESCRIPTION OF THE INVENTION

The security document identifier of which this invention consists relies on simultaneous use of several types of sensors, combining the information they provide to increase the efficiency of the validation.

This device may be implemented with a minimum number of components and is capable of transmitting the information it obtains to other equipment, and may be used in automatic vending machines of any product or operate independently.

### PREFERRED EMBODIMENT OF THE INVENTION

The security document identifier carries out validation of the document by means of a multi-sensor system which simultaneously inspects the document with an infra-red and a visible light optical sensors as well as a magnetic sensor which , in addition to detecting its magnetism, determines the magnetic code of the security filament.

The invention incorporates a reduced number of sensors to analyse the physical characteristics of the document, in order to determine properties such as the start of the document by establishing a reference point, its length, authenticity of the paper, presence and code of watermarks, presence and colour of printed lines and security lines, and detecting the existence of the magnetic security filament code.

The identifier is capable of combining the information provided by these sensors not only to determine the validity of the document but also to determine its denomination and to estimate its deterioration.

Handling of the documents or bills concerned is performed by conventional means which using friction insert and extract the document. Likewise, it is provided with the required power sources which are conveniently located so that they do not affect the readings of the sensors.

In this manner, and more specifically, the novelty of the document identifier is that it may detect at least and simultaneously the bar-code watermarks of the document, the pairs of infra-red transparent and non-transparent inks (TIR, NO-TIR) and the magnetic code of the security filament inserted in the paper.

The identifier device decodes the information which these three types of sensors provide and combines it to determine the authenticity of the document to be validated. The information provided by each sensor is monitored, so that when the optical sensor detects the presence of the security filament by its opacity, the magnetic sensor identifies the start of the code to read it.

In this manner the reliability of the validation is increased, as a single security element is inspected repeatedly by at least two different types of sensor, without this implying an increased production cost of the identifier.

This increased reliability is not quantitatively proportional to the number of sensors, i.e., reliability is not doubled by the use of two sensors, but rather due to the use of more than one sensor the inspection no longer depends on a comparison of samples and model patterns. Indeed, aside from employing models to know the shape and intensity which the signals from the various sensors must have, in order to indicate the validity of the document inspected, these signals are compared to each other.

By means of this intrinsic comparison mechanism, one sensor, preferably the optical sensor, acts as a lock, and signals are processed giving rise to an abstract signal which is correlated to model signals. If a given threshold is exceeded, the signal of the lock sensor is compared to the signals of the remaining sensors, which act as keys. The software logic provided uses an intersection operator to determine coincidence between the signals of the document itself, and by means of a suitable logic circuit admits only documents for which the key signals from different sensors, such as the magnetic sensor, agree with the lock signal of the first sensor. Thus, the inspection is free of mistakes caused by direct comparison to a single model due to aging in single-sensor identifiers.

## Claims

1. Security document identifier which, in order to increase the reliability of the document validation process, is **characterised in that** in the document validation it employs as a minimum and simultaneously an infra-red sensitive optical sensor, a visible light sensor and a magnetic sensor, so that the identifier is capable of simultaneously detecting respectively the bar-code watermarks, infra-red transparent and non-transparent ink pairs (TIR, NO-TIR) and the presence and magnetic code of the security filament present in the document to be validated, combining the information provided by these two types of sensor and comparing them with each other to determine the validity of the document.

2. Security document identifier, as claimed in claim 1, **characterised in that** it is provided with an optical sensor which detects and locates the presence of the document security filament by its opacity, and with a magnetic sensor which identifies the start of the code in order to read it.

3. Security document identifier, as claimed in above claims, **characterised in that** it is provided with logic or software such that it matches signals arriving from the different sensors so that one signal acts as a lock and the rest as keys, so that when a key signal matches the lock signal a logical circuit opens which allows to recognise the document as authentic or valid, so that the acceptance process is independent of the state of the samples, as it performs a comparison of the same document and not a direct comparison with other model documents.

4. Security document identifier, as claimed in above claims, **characterised in that** the number of key signals is greater than one, with the suitable logic then employed by the software using an intersection operator for document acceptance determining the consistency of several signals with that of the sensor acting as a lock, thus minimising the risk of acceptance errors.

5. Security document identifier, as claimed in above claims, **characterised in that** the optical sensor acts as a lock, providing an intrinsic factor for acceptance of signals arriving from the other sensors.
